# EUROPEAN PATENT SPECIFICATION

(11) **EP 1 379 794 B1**
(45) Date of publication and mention of the grant of the patent: **16.03.2005**
(21) Application number: 02800498.4
(22) Date of filing: 22.04.2002
(51) Int. Cl.: F16D 65/12

(54) **BELL FOR BRAKING DISC AND DISC FOR A DISC BRAKE**
TOPF FÜR EINE BREMSSCHEIBE SOWIE BREMSSCHEIBE FÜR EINE SCHEIBENBREMSE
CLOCHE POUR DISQUE DE FREINAGE ET DISQUE POUR FREIN A DISQUES

(43) Date of publication of application: 14.01.2004
(73) Proprietor: Freni Brembo S.p.A., 24035 Curno (Bergamo) (IT)
(72) Inventor: PACCHIANA, Giovanni, Paolo, I-24040 Locate, Bergamo (IT); LORENZO, Silvio, I-84025 Eboli, Salerno (IT)
(74) Representative: Crippa, Paolo Ernesto
(86) International application number: PCT/IT2002/000257
(87) International publication number: WO 2003/089802

(56) References cited:
- EP-A- 1 091 137
- WO-A-02/01088
- DE-A- 19 628 331

## Description

In general, the present invention relates to a disc-brake bell suitable for connection to a braking band. A further aspect of the present invention relates to a disc-brake disc, comprising the disc-brake bell, which combines particular lightness and structural simplicity with good resistance to wear and to thermal/mechanical stresses.

A particular embodiment of the present invention relates to a bell suitable for association with a ventilated braking band and to a disc-brake disc comprising a ventilated braking band in order to achieve good cooling efficiency combined with good resistance to wear and to thermal/mechanical stresses.

In particular, the present invention relates to a disc comprising a bell having a rotation axis and a braking band associated with the bell. The band and the bell are produced as separate parts and are connected to one another by axial and tangential restraints.

It is known that braking devices commonly in use in motor vehicles comprise a metal disc which is fixed to the wheel hub and astride which a brake caliper acts, the caliper being fixed to the stub axle or to the hub-carrier of the vehicle and having pads provided with friction linings.

In particular, the disc comprises a braking band provided with at least one braking surface, and a bell fixed to the wheel hub.

The calipers, which are operated hydraulically by cylinder/piston units, press the pads against the braking surface of the braking band. The braking action is thus produced by friction between the pads and the braking surface of the braking band of the disc brake.

The friction of the pads against the braking band of the disc leads to dissipation of the kinetic energy of the masses to be braked as heat, which results in a rise in the temperature of the disc, this rise being particularly great in the region of the braking surface. For this reason, the braking band must have good cooling efficiency and must be particularly resistant both to the wear brought about by the abrasive action of the pads, and to heat.

These wear-resistance characteristics are not, however, required of the bell, for which it is advantageous to use a material which enables a complex geometrical shape with good mechanical characteristics to be produced.

For the above-mentioned reasons, it is known, particularly in high-performance braking devices, to form the disc in two parts; the braking band is made of material with is resistant to heat and to wear and the bell of material which has the above-mentioned mechanical characteristics.

The materials commonly used for the production of the braking band are composite ceramic materials such as, for example, carbon/silicon carbide/silicon (C/SiC/Si) or those with a metal matrix (MMC) which are distinguished by good wear resistance, a high degree of hardness and, at the same time, brittleness, a low coefficient of thermal expansion, and low specific weight.

In contrast, the materials commonly used for the bell are metallic materials such as steel, anodized aluminium alloys, etc.

To take account of the different thermal expansions of the materials and of the brittleness of the braking band, the coupling between the bell and the braking band is often achieved by means of a joint which has tangential and axial restraints but is free of any radial restraint so as to permit the different radial expansions of the two parts due to heat and to prevent cracks or splits arising in the composite material of the braking band.

In particular, the tangential restraint of the above-mentioned coupling, which is essential for the transmission of the braking torque, is achieved by means of a toothed coupling between radial teeth provided around the outer surface of the bell and corresponding radial teeth provided around the inner surface of the braking band.

A tangential restraint achieved by a toothed coupling between the teeth of the bell and those of the band is described, for example, in WO 02/01088 or in EP1091137.

Known couplings between the bell and the band which are suitable for restraining them tangentially and axially are often intrinsically complex and also involve structural and manufacturing complexity, particularly of the bell. The complexity of the bell structure leads to a considerable weight of the bell and clearly constitutes a considerable disadvantage of bells and discs of the prior art.

In addition to the above-mentioned disadvantage connected with the heavy weight of the structure, there is the problem of cooling efficiency which, in the case of a solid braking band, is quite low and not optimal.

As well as what has been mentioned above, there is therefore a particular need to improve the cooling efficiency of a disc produced by the assembly of a bell and a band which are produced separately and of two different materials, as described above.

In disc-brake discs formed by a one-part bell and braking band, the problem of optimal cooling efficiency is solved by the use of a so-called ventilated braking band.

Unfortunately, the use of a configuration of this type for the braking band of a two-part disc is rendered ineffective by the known couplings between the band and the bell which, by their very nature, affect particularly the region in which the air enters the ventilation ducts of the band.

The technical problem underlying the present invention is therefore that of providing a disc and a bell having structural and functional characteristics such as to satisfy the above-mentioned need and to overcome the disadvantages mentioned above with reference to the discs of the prior art.

This problem is solved by a bell according to Claim 1 and by a disc-brake disc, comprising the bell of claim 1, according to Claim 16.

Further characteristics and advantages of the bell and of the disc according to the present invention will become clearer from the following description of some preferred embodiments, provided by way of non-limiting example, with reference to the appended drawings, in which:
Figure 1 is a perspective view of a disc-brake disc which has characteristics according to the present invention,
Figure 2 shows an enlarged portion of Figure 1, with parts separated,
Figure 3 shows the portion of Figure 2 indicated by the arrow III,
Figure 4 is a partially-sectioned plan view, taken on the arrow IV, of the disc of Figure 1,
Figure 5 is a partial view of the disc according to the invention, sectioned on the line V-V of Figure 4,
Figure 6 is a partial view of the disc, sectioned on the line VI-VI of Figure 4,
Figure 7 is a perspective view of a possible further embodiment, with parts separated, and
Figure 8 is a perspective view of a further possible embodiment of the disc-brake disc according to the present invention.

With reference to the drawings, a disc-brake disc, generally indicated 10, comprises a braking band 12 and a bell 14, formed as separate parts. The disc shown in the drawings has a rotation axis 15, generally coinciding with the rotation axis of the wheel of the vehicle on which the disc is to be mounted.

According to one possible embodiment, the material used for the production of the bell is selected from metallic materials having good mechanical characteristics such as, for example, steel, hard anodized aluminium alloys, sintered steel, or cast iron.

In contrast, the materials used for the production of the braking band are composite materials such as carbon/silicon carbide/silicon (C/SiC/Si) or those with a metal matrix (MMC) such as, for example, aluminium alloys reinforced with ceramic particles such as silicon carbide, alumina, titanium boride, etc.

The braking band 12 has the same rotation axis as the disc and comprises braking surfaces 12a for interacting with the pads of a brake caliper, not shown, in order to exert the braking force on the vehicle.

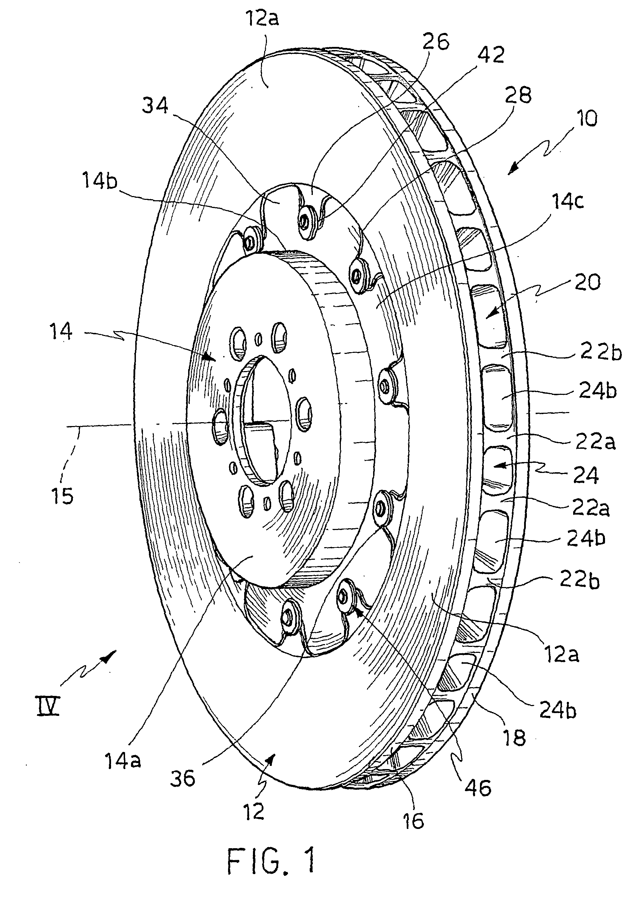

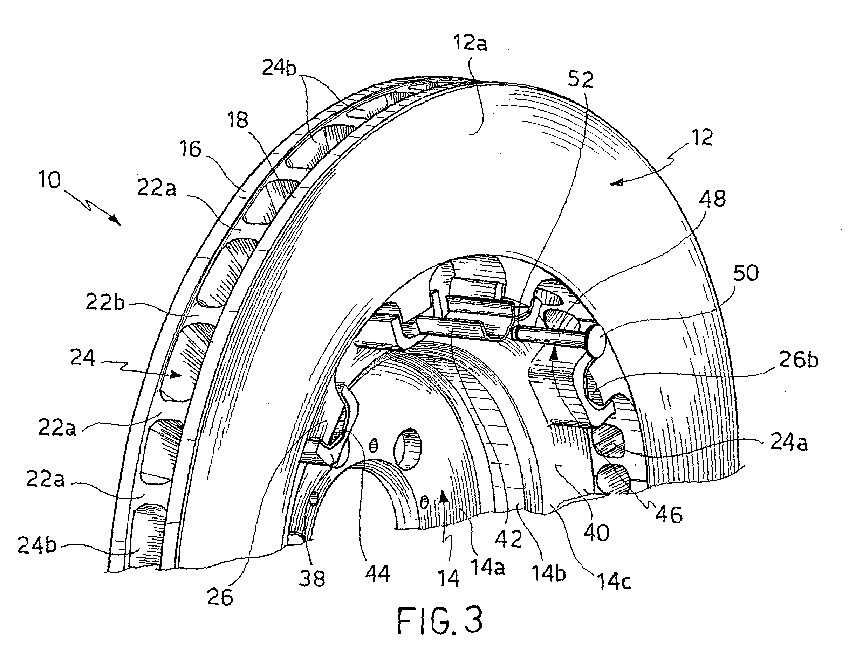

The braking band 12 is, for example, a ventilated band comprising two plates, indicated 16 and 18, respectively. The plates constitute two parallel walls facing one another a certain distance apart, defining a space 20. In the embodiments shown in Figures 1-7, the plate disposed on the same side as the bell 14 is indicated 16 and the plate on the side remote from the bell 14 (when the disc is assembled) is indicated 18.

The two plates 16 and 18 are connected to one another by fins 22a and 22b which extend between the two plates and define ventilation ducts 24 through the space 20.

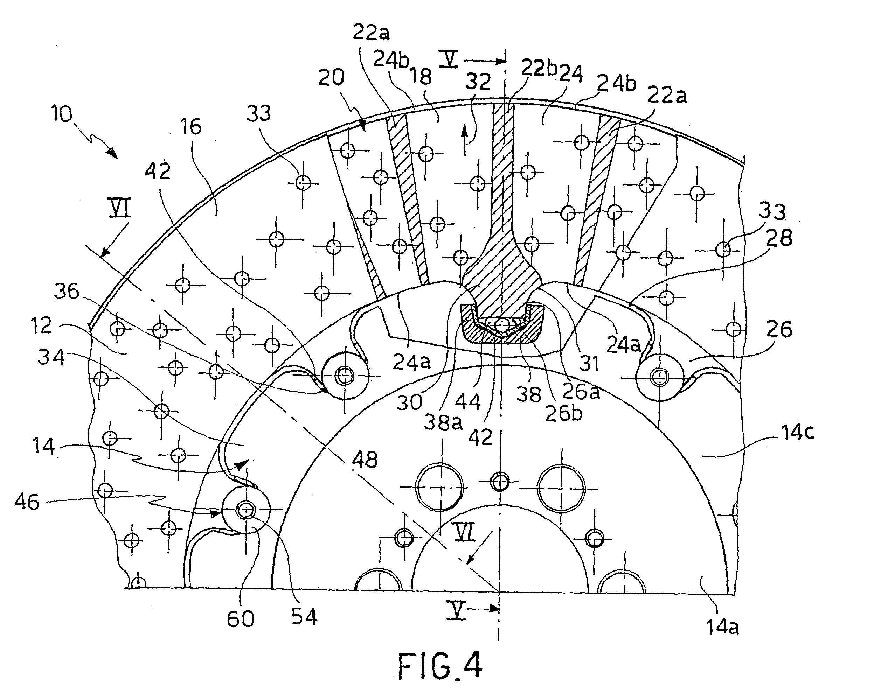

The fins may be formed in accordance with various configurations. In the embodiment shown by way of example in Figure 4, the fins 22a and 22b and the corresponding ventilation ducts 24 are arranged in a radial direction relative to the rotation axis 15.

The braking band 12 has an inner set of teeth, that is, it has a plurality of radial teeth 26 formed around a inner circumferential portion of the braking band, and preferably spaced apart uniformly. The teeth alternate with a corresponding number of recesses 28 and preferably extend substantially through the entire thickness of the braking band.

According to one possible embodiment, the teeth 26 of the braking band 12 are constituted by extensions of some of the fins defining the ventilation ducts 24 inside the braking band. For clarity of explanation, in the embodiment shown in the drawings, the fins which extend to form the teeth 26 are indicated 22b, whereas the rest of the fins are indicated 22a.

According to one possible embodiment shown, for example, in Figure 4, the teeth 26 may be constituted by extensions of one fin in every three, thus achieving a configuration in which two consecutive teeth define a portion of band corresponding to three ventilation ducts, although the arrangement may be different.

According to a possible further embodiment, each of the fins 22b which are extended to form the teeth 26 of the braking band has a tangential enlargement 30 formed in the vicinity of the actual tooth 26. One possible embodiment is shown in the drawings, in which both the tangential dimensions of the teeth and those of the respective fins 22b are smaller than those of the tangential enlargement 30.

The connection between the tangential enlargement and the respective fin is preferably formed gradually, by gradual widening of the ventilation duct in a direction 32 away from the centre, and corresponding to the direction of the air-flow through the ducts 24 during the rotation of the disc 10.

In the embodiment in which the tangential dimensions of the teeth 26 are smaller than those of the respective tangential enlargement 30, the connection between the two is formed by means of a connecting surface 31 which may be completely outside the ventilation duct, as shown, for example, in Figure 4, or which may also extend inside the duct.

According to one possible embodiment, the teeth 26 comprise sides which have at least one flat portion 26a, preferably the end portion of the tooth in the region of the head of the tooth. The expression "sides of a tooth 26" is intended to define the surfaces of the tooth substantially transverse the two plates 16 and 18 and arranged approximately in a radial direction relative to the braking band. The flat portion 26a is preferably a continuous axial extension of the connecting surface 31. According to a further possible embodiment, each tooth 26 comprises a flat head 26b, the expression "head of a tooth 26" being intended to define a surface transverse the two plates 16 and 18 and arranged in an approximately tangential direction relative to the braking band.

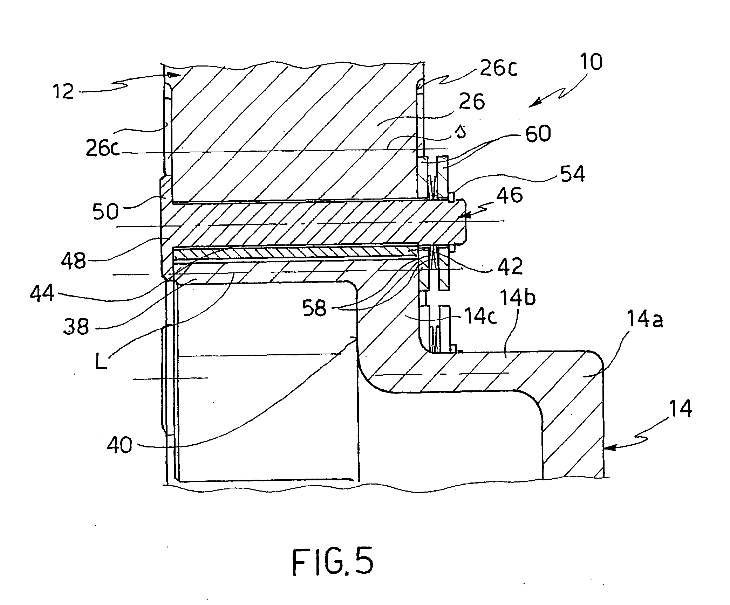

In addition to the sides and to the head, a tooth 26 is defined by substantially flat faces 26c parallel to the plates 16 and 18. According to one possible embodiment shown, for example, in Figure 5, the thickness of the teeth 26, measured in a direction parallel to the rotation axis 15, is slightly less than the thickness of the braking band. The faces 26c of the teeth in fact adjoin the braking surfaces of the two plates of the band.

According to a possible further embodiment, the ventilation ducts 24 have inlet sections 24a having dimensions which are substantially equal from one duct to another. The expression "inlet section 24a of a ventilation duct" is intended to define the cross-section for the air-flow in an area substantially perpendicular to the air-flow and facing the interior of the braking band, that is, towards the rotation axis 15. According to one possible embodiment shown, for example, in Figure 4, the inlet section 24a of each ventilation duct which is defined by a fin 22b that is extended into a tooth is slightly curved, following the shape of the connecting surface 31.

Analogously, the ventilation ducts 24 may have outlet sections 24b having dimensions which are variable from one duct to another. The expression "outlet section 24b of a ventilation duct" is intended to define the cross-section for the air-flow air in an area substantially perpendicular to the air-flow and facing outwardly relative to the braking band.

In particular, the dimensions of the outlet sections 24b of the ventilation ducts which are defined on one side by a fin 22b which is extended to form a tooth 26 are equal to one another and larger than those of the outlet sections 24b of the ventilation ducts defined by fins 22a which are not extended to form teeth 26. A possible configuration is therefore that shown in Figures 1-4 in which two ventilation ducts 24 with larger outlet sections alternate with one ventilation duct 24 with a smaller outlet section.

In the view of Figure 4, the plate 16 has been partially sectioned to show an example of the configuration of the ventilation ducts according to one possible embodiment of the braking band. On account of the radial arrangement of the fins, the ducts defined by two consecutive fins 22a have a cross-section for the air-flow which increases in the direction of the air-flow between the two plates. With regard to the ventilation ducts defined between a fin 22a and a fin 22b, the cross-section for the air-flow increases in the direction of the air-flow both on account of the radial arrangement of the fins and on account of the connection between the tangential enlargement 30 and the fin 22b.

According to one possible embodiment, the internal profile of each recess 28 of the braking band 12 is a portion of a circle having its centre at a point on the rotation axis 15, that is, a circle concentric with the braking band, or a portion of an ellipse having its concave side facing the rotation axis.

According to one possible embodiment such as, for example, that shown in Figure 4, the braking band 12 may comprise holes 33 extending through the thickness of both plates 16 and 18 to improve the efficiency of the cooling of the band. In the embodiment shown, the holes preferably have circular cross-sections and are distributed over the entire braking surface of the braking band.

The bell 14 has the same rotation axis as the assembled disc and as the braking band and advantageously extends in a configuration in which cylindrical portions alternate with flat portions or ring portions coaxial with the axis 15.

In particular, the bell 14 comprises a plate 14a provided with holes for connection to a vehicle wheel hub. The axis of the plate 14a coincides with the rotation axis 15 of the bell. The outer edge of the plate 14a is substantially a circle from which a cylindrical portion 14b extends parallel to the axis 15.

The plate 14a and the cylindrical portion 14b are connected continuously in the manner of a beaker with a perforated base. The cylindrical portion 14b is connected continuously to an annular portion 14c substantially parallel to the plate 14a. The annular portion 14c has, on an outer or peripheral portion thereof, relative to the rotation axis 15, radial teeth 34 alternating with a corresponding number of recesses 36, thus defining a portion for connection to the braking band 12. The expression "outer or peripheral portion" is intended to define the portion of the bell radially farthest from the rotation axis 15.

The radial teeth 34, and hence the respective recesses 36, are preferably spaced apart uniformly and equal in number to the number of radial teeth 26 and of respective recesses 28 of the braking band 12.

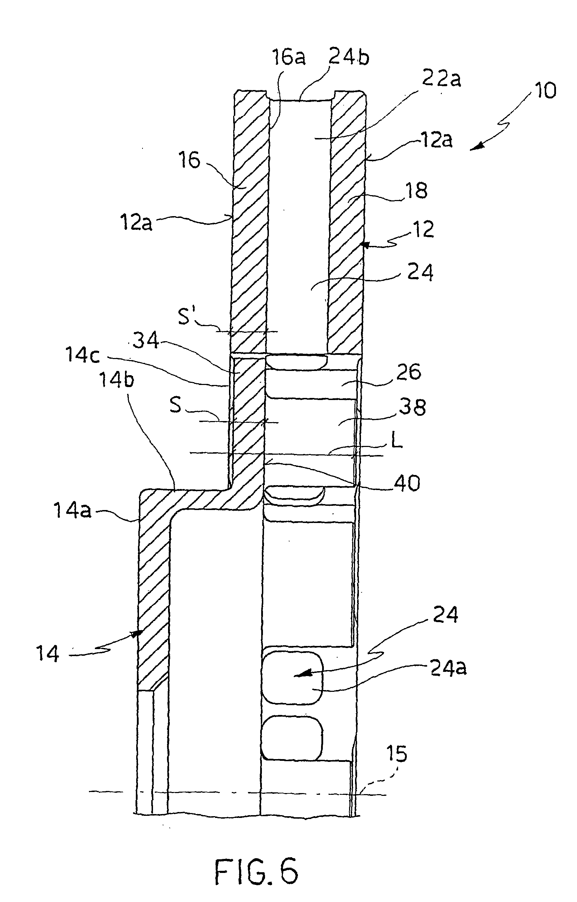

The dimension or, more particularly, the thickness of the radial teeth 34, measured in a direction parallel to the rotation axis 15, corresponds substantially to the thickness of the material of the bell and, in particular, of the annular portion 14c which is connected to the braking band 12. This dimension or thickness is indicated S in Figure 6.

A wall, indicated 38, which is preferably continuous and substantially "U"-shaped, projects from the bell, and in particular, projects in a cantilevered manner from the annular portion 14c, in a direction parallel to the rotation axis 15. As shown in the drawings, the bell preferably has a number of walls 38 equal to the number of recesses 36, the walls 38 being arranged in a manner such as to extend the recesses, as described below. Each wall 38 projects from the free edge of the respective recess so that the recess is similar to a channel extending axially relative to the disc, without steps or catches.

In the embodiments shown, each of the recesses 36 is thus defined by the thickness of the bell and by the wall 38, which projects from the bell.

The length of a recess 36, measured in a direction substantially parallel to the rotation axis 15, is indicated L. As can also be seen from a comparison between Figures 5 and 6, the length L of a recess 36 of the bell is greater than the thickness S of the teeth of the bell, by virtue of the presence of the wall 38 which defines the recess.

The thickness S of the teeth of the bell is preferably comparable to the thickness S' of the plate 16 which is on the bell side, whereas the length L of the wall defining the recesses 36 is comparable to the total thickness s of the braking band and of the teeth 26.

According to one possible embodiment, each wall 38 at least partially defining a recess 36 of the bell projects in a cantilevered manner relative to a plane 40 containing a front face of each tooth 34 of the bell.

This plane 40 is shown, for example, in Figure 5 or Figure 6 and, in the assembled disc, is preferably arranged as an extension of the inner plane of a plate of the ventilated band. This is shown, for example, in Figure 6 in which the inner surface of the plate 16 on the bell side is indicated 16a. In fact it can be seen that, when the disc is assembled, the surface 16a of the plate 16 and the plane 40 of the bell constitute theoretical extensions of one another.

According to one possible embodiment, the wall 38 projects from the plane 40 in a cantilevered manner along an axis parallel to the rotation axis 15, preferably in only one direction. A possible embodiment is shown in Figure 5 in which the wall 38 projects from the plane 40 in a cantilevered manner, away from the annular portion 14c and from the plate 14a of the bell. The shape and dimensions of the wall 38 and of the recess 36 defined thereby are preferably such as to house a tooth 26 of the braking band so that the band and the bell are assembled by a form fit between the teeth of one and the respective recesses of the other, ensuring rotational drive. In fact each wall 38 is suitable for driving the braking band during rotation, and extends the corresponding recess 36.

According to one possible embodiment, the wall 38 defining a recess 36 may comprise flat portions 38a suitable for interacting with the sides of a tooth 26 of the band. The remaining portion of the wall 38 may be connected with a curved shape or even with flat portions. The wall 38 is thus suitable for driving the braking band 12 during rotation.

According to one possible embodiment, the wall 38 defining a recess 36 of the bell has a radial extent less than that of the adjacent teeth 34, thus leaving an outer portion of the teeth free.

The external profile of each tooth 34 of the bell is constituted by a portion of a circle having as its centre a point on the rotation axis 15, that is, a circle concentric with the disc, or by a portion of an ellipse having its concave side facing the rotation axis, that is, of complementary shape to the teeth of the band, suitably spaced therefrom.

In relation to the characteristics of the band, each tooth of the bell extends radially with an extent equal to that between two consecutive teeth of the band which, according to the embodiment of Figure 4, corresponds to three ventilation ducts 24, although the arrangement may be different.

As stated above, the coupling between the bell 14 and the braking band 12 is formed, in the first place, by a form fit between the teeth of one and the recesses of the other. This coupling restrains the band on the bell with regard to rotational movements about the axis 15.

In the coupling between the band and the bell, each wall 38 of the bell extends around the respective tooth 26 of the band, substantially along the entire length of the tooth in a direction parallel to the rotation axis 15, at the sides and at the head of the tooth. The walls 38 can thus drive the band during rotation by interacting with the respective teeth of the band. Each wall 38 of the bell interacts with a single tooth of the band.

The length L of each recess is comparable to the thickness s of the teeth 26 of the braking band, this length and this thickness being measured in a direction substantially parallel to the rotation axis 15.

Figures 5 and 6 show an embodiment of the coupling between the bell and the band. Figure 5 corresponds to a section through the disc, taken in a median radial plane with respect to a tooth 26 of the band 12 and to a recess 36 of the bell 14. It can thus be seen from this drawing that the length L of a recess and the thickness s of the tooth 26 of the band are comparable to one another. Figure 6 corresponds to a section through the disc, taken in a median radial plane with respect to a recess 28 of the band 12 and a tooth 34 of the bell 14. As can be seen from this drawing, the thickness S of the tooth of the bell is preferably substantially equal to the thickness S' of the plate 16 which is on the same side as the bell 14 and less than the length L of the wall 38. Moreover, this drawing shows that, in the coupling between the bell and the band, the plate 16 and the teeth 34 of the bell constitute theoretical extensions of one another, and the inlet sections 24a of the ventilation ducts affected by the angular extent of a tooth 34 of the bell remain completely free.

According to one possible embodiment of the disc 10, the tangential restraint between the band and the bell is achieved by a toothed coupling with clearance between the teeth 34 of the bell 14 and the teeth 26 of the band 12. In this case, an insert element 42 capable of plastic or elastic deformation is advantageously provided between the wall 38 defining a recess 36 of the bell and the respective tooth 26 of the braking band to ensure a substantially uniform distribution of the loads transmitted by a braking operation.

The expression "material capable of plastic or elastic deformation" is intended to define a material which, when subject to a load such as, for example, the braking force acting on the band, undergoes elastoplastic or elastic deformation.

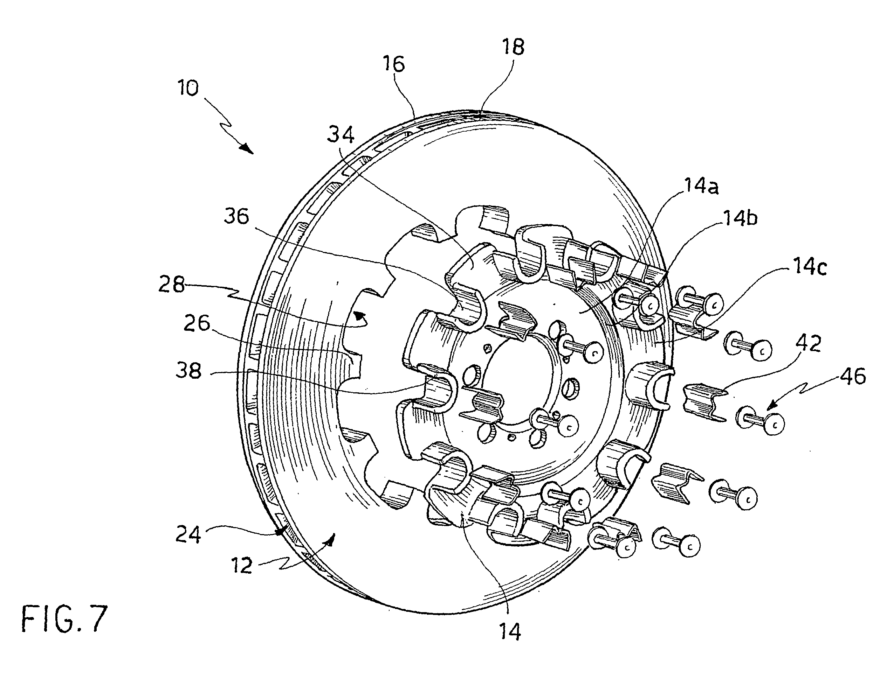

Each insert element 42 is constituted by a plate-shaped element bent substantially to a "U"-shape as shown, for example, in Figure 4, or to a "W"-shape, as shown in Figure 7.

Each wall 38, and consequently also each recess 36 of the bell, and possibly the respective insert element 42, is shaped in a manner such as to define a seat 44 for housing axial restraining means 46 operating between the bell and the braking band. In particular, the seat for housing the axial restraining means 46 is provided by virtue of the presence of a continuous wall 38 which extends around a tooth of the band at the sides and at the head. The wall 38 thus performs both the task of bringing about rotation of the band with the bell, and that of defining a seat for housing the axial restraining means.

If the insert element 42 and the wall 38 are substantially "U"-shaped, the seat 44 is defined between the wall 38/insert element 42 and the respective tooth 26 of the ventilated braking band.

If the wall 38 is substantially "U"-shaped and the insert element 42 is substantially "W"-shaped, the seat 44 is defined between the wall 38 and the insert element 42/tooth 26 of the braking band.

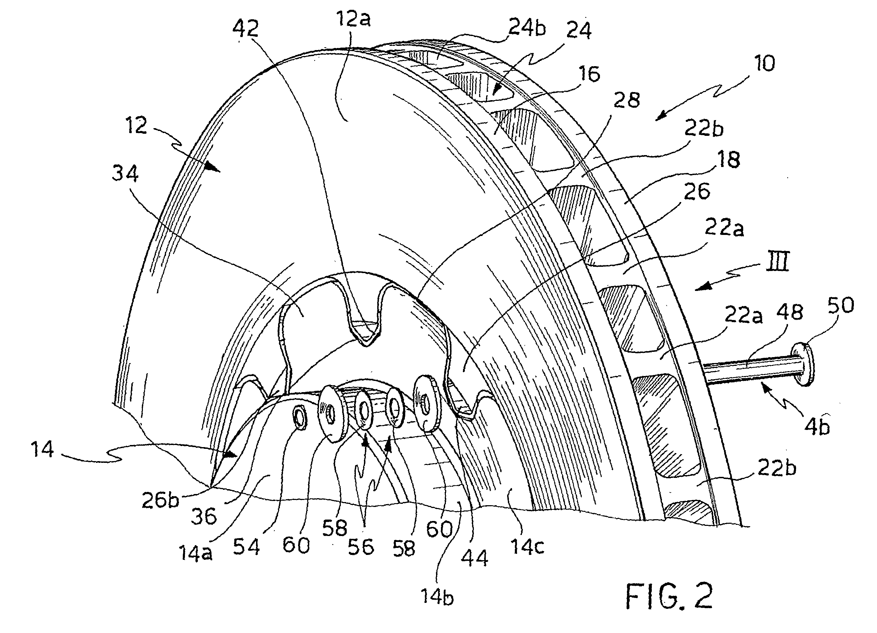

As shown, for example, in Figure 2, the axial restraining means 46 comprise a plurality of pins 48 each housed in one of the housing seats 44.

Each pin 48 has a head 50 for abutting, preferably, the free end of the wall 38 which corresponds to the end farthest from the plate 14a for fixing to the vehicle wheel hub, that is, on the side remote from the bell.

At the opposite end to the head 50, the pin 48 comprises a notch 52 for housing a retaining ring 54. According to one possible embodiment, resilient means 56 are provided, acting in a direction substantially parallel to the rotation axis 15 and operating to restrain the band axially relative to the bell. These resilient means 56 may, for example, be constituted by opposed crinkle washers or Belleville washers 58 fitted between two washers 60 and restrained between the bell/band and the retaining ring 54.

The method of assembling a disc as described above is given below.

Figure 2 shows an example of the assembly stage in which the bell is mounted on the band by coupling of the respective teeth/recesses. The pins 48 are inserted in the seats 44 from the side on which the plate 18 is disposed, in a direction substantially parallel to the rotation axis 15. The head 50 abuts the free surface of the wall 38 and the face 26c of the tooth 26 on the side remote from the bell.

A washer 60, two Belleville washers 58 arranged with their concave sides facing in opposite directions, a washer 60, and the retaining ring 54 are fitted in sequence, the retaining ring 54 being locked in the notch 52. The unit thus assembled is shown in the section of Figure 5.

When the disc is in operation, as described above, the toothed coupling ensures tangential restraint between the band and the bell, whilst the pins 48, which are advantageously housed between the wall 38 and the respective tooth, ensure axial restraint between these two. Tangential restraint is ensured by the interaction between the teeth of the band and the respective recesses of the bell which advantageously come into contact substantially along the entire depth L of the recess (or thickness s of the tooth of the band).

When the tangential restraint is achieved with the interposition of insert elements 42, the elastoplastic or elastic deformation of these elements constitutes a compliance of the connection between the teeth of the bell and of the braking band which enables all of the teeth to be brought into a working condition in which the load is distributed uniformly.

In particular, if the material undergoes elastoplastic deformation, when the load is applied to the braking band for the first time, an at least partial permanent deformation of the insert elements 42 is brought about and takes up the manufacturing tolerances of the coupling between the teeth of the bell and those of the band. Subsequent loads applied to the disc will therefore be transmitted to all of the teeth substantially uniformly.

If the material undergoes elastic deformation, it is appropriate to distinguish between two situations of use of the insert elements.

If the insert elements are arranged between the teeth of the bell and of the braking band without preloading, upon the application of the load, in a first stage, the clearance present between the teeth will be taken up and the band will rotate relative to the bell without transmitting the load. When the smallest of the clearances present between the teeth and a portion of an insert element present therein has been taken up, the insert element will come to bear on the tooth of the bell and will start to deform resiliently under load.

As the relative rotation between the band and the bell continues, a portion of a second insert element will come to bear in turn on the respective second tooth of the bell, and so on until all of the teeth have come to bear in order to work simultaneously until the total load is reached. Between the first tooth and the last tooth to come to bear, there will be a load difference which will correspond to the resilient reaction of the insert element which was the first to come to bear, and will be equal to the product of the elastic constant of the insert element and the largest tolerance (or difference between the largest clearance provided between the teeth of the bell and of the band and the smallest of these clearances, that is, the difference due to the manufacturing tolerances). This load difference will be smaller, the smaller is the ratio between the difference in the dimensions of the teeth and the deformation which the insert undergoes (from the moment at which all of the teeth are bearing) in order to reach the total load.

Alternatively, the insert elements are arranged between the teeth of the bell and of the band with preloading, for example, because the insert elements are fitted between the teeth of the bell and of the band with a predetermined interference (or force fit) which brings about preloading thereof. In this case, the differences in load between the various teeth will be given by the differences in the preloading of the various inserts due to the manufacturing tolerances of the distances between the facing teeth. The largest of these preloading differences will correspond to the maximum load difference present between the teeth at the same moment. Precisely because a preloading is provided, in this situation, there is no clearance to take up between the facing teeth and, when the load due to the braking action is applied, all of the insert elements deform simultaneously to the same extent, all increasing the load to the same extent.

In other words, the tooth which had the greatest preloading will be that which is most loaded, purely by a value equal to the greater extent of its preloading. This difference in preloading which, in comparison with the overall load, will be equal to only a small fraction thereof, will be the sole non-uniformity in the distribution of the load on the teeth of the bell and of the braking band.

It will be appreciated from the foregoing that the provision of a bell which can be connected to a braking band in accordance with the present invention enables the advantages of having the band and the bell in two separate parts also to be combined with that of a very light structure, in which solely those walls which are necessary for the tangential and axial interaction between the bell and the band are extended.

The advantageous configuration of the bell, in which flat or ring portions alternate with cylindrical portions, with reference to the rotation axis 15, limits the masses required to the minimum and considerably simplifies the structure. Moreover, the provision of walls which project from the bell limits the dimensions and masses purely to the structures which can ensure uniform contact distributed over a wall, between band and bell.

In particular, by virtue of the presence of a ventilated band, according to the present invention, it is possible to combine the advantages of having the band and the bell in two separate parts with that of optimal cooling efficiency, without interference with the air-flow by the tangential and axial restraints between the band and the bell.

In fact, by virtue of the fact that the bell comprises a plurality of radial teeth alternating with respective recesses in which each of the recesses is defined by at least one wall and has a length greater than the thickness of the teeth, it is possible to use a ventilated braking band without the bell obstructing the ventilation ducts.

Moreover, two adjacent walls 38 and the respective plane 40 substantially define an air-inlet duct which favours the channelling of the air into the ventilation ducts of the band which are affected by the angular extent of a tooth of the bell.

In addition to the foregoing, the tangential restraint between the bell and the band makes maximum use of the thickness S of the teeth of the bell, rendering it substantially equal to the thickness S' of the respective plate which, in the embodiments illustrated, is the plate 16 on the bell side. The configuration as described above also permits the formation of a substantially continuous ventilation duct between the bell and the band, without steps, by virtue of the fact that the plane 40 and the inner surface of the respective plate (that is, the plate 16 on the bell side) form extensions of one another when the disc is assembled.

The above-mentioned configuration of the bell not only eliminates obstructions to the air-flow, but also directs the air-flow, optimizing the quantity of air passing through the ventilation ducts and avoiding tortuous paths thereof. As a result, the advantageous coupling between the bell according to the present invention and a ventilated band produces the effect of an extension of the ventilation ducts towards the interior of the bell, utilizing the channelling offered by two adjacent walls 38 and keeping the path of the air substantially perpendicular to the axis 15.

As a result, the bell and the disc according to the present invention satisfy the above-mentioned need to limit the weight and the complexity of the structure and optionally to optimize cooling efficiency, whilst maintaining good resistance to wear and to thermal/mechanical stresses which is ensured by the presence of a band and a bell made of different materials and connected without radial restraints.

The foregoing is achieved without the need for any structural, manufacturing, or functional complications, by taking advantage of the versatility of the bell and, in particular, of its material, to produce a shape as described above. The bell can in fact be made by precision casting, for example, of stainless steel or of pressed or sintered steel, or of pressed or cast light alloys.

The presence of a wall 38 which extends the length of the respective recess of the bell substantially to the extent of the respective tooth of the band enables the loads to be distributed over a fairly large surface, keeping the contact pressures low. At the same time, the presence of a continuous wall which extends around the respective tooth of the band at the sides and at the head enables the structure to be optimized, defining a seat for the axial restraining means between the bell and the band.

By virtue of the above-mentioned configuration, the structure of the bell is considerably lightened whilst ensuring optimal contact between the band and the bell with regard to the tangential restraint between these two. The above-mentioned configuration also enables the structure to be optimized whilst avoiding further machining and bringing together in the wall 38 both the function of defining a recess of the bell and driving the band during rotation, and that of housing the axial restraining means between the band and the bell.

Naturally, variations and/or additions may be provided for the embodiment described and illustrated above.

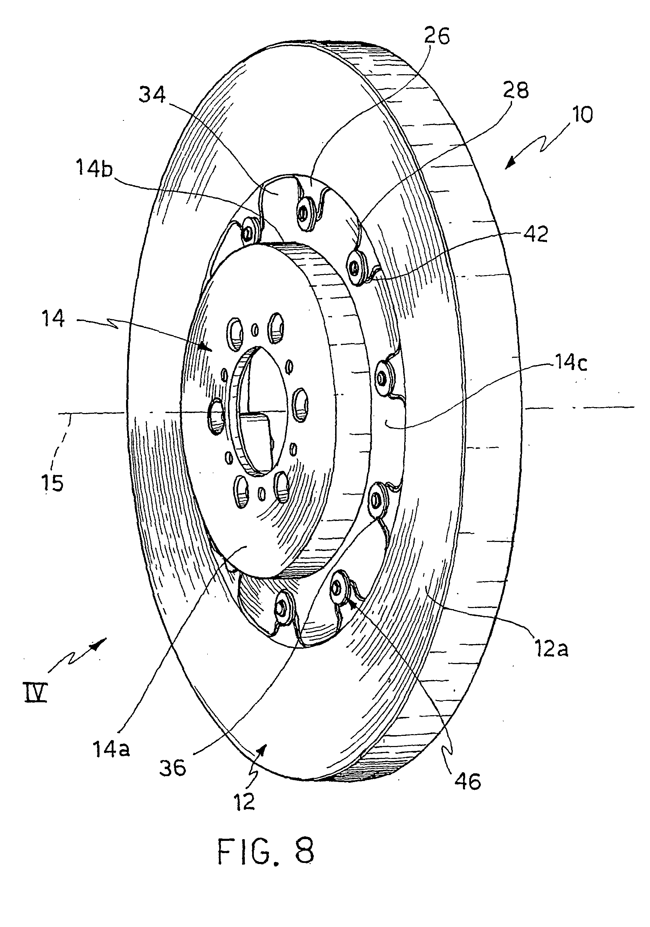

For simplicity, the foregoing description has been given with reference to a ventilated band, although the bell thus provided for solving the above-mentioned problem may be coupled with a solid braking band, for example, such as that shown in Figure 8.

Further possible variations may relate, for example, to the ends of each wall 38 which project relative to the teeth of the bell or to the plane 40, and which may be chamfered, preferably towards the inside of the respective recess, and may have a shape complementary to corresponding profiles of the tangential enlargement of the fin of the braking band.

According to one possible embodiment, the wall 38 defining a recess 36 of the bell forms an extension of the tangential enlargement 30 of the fin 22b of the band, thus defining a substantially continuous wall for the flow of the air along the ducts 24.

The possible embodiments described above as further, preferred and/or optional, have been shown in the appended drawings as forming parts of a single embodiment, but may actually be adopted individually without thereby broadening the content of the present description.

As an alternative to the embodiment shown in the drawings, axial restraint may be achieved differently, for example, by means of bolts housed in the seats 44.

In order to satisfy contingent and specific requirements, a person skilled in the art may apply to the above-described preferred embodiments of the disc and of the bell many modifications, adaptations and replacements of elements with other functionally equivalent elements without, however, departing from the scope of the appended claims.

## Claims

1. A disc-brake bell (14), suitable for connection to a braking band (12), the bell having a rotation axis (15) and comprising a plurality of radial teeth (34) formed along an outer or peripheral portion of the bell and alternating with respective recesses (36) suitable for housing radial teeth of the braking band, in which the bell comprises a plate (14a) provided with holes for connection to a wheel hub of a vehicle, a cylindrical portion (14b) which projects continuously from an outer edge of the plate (14a) parallel to the rotation axis (15), an annular portion (14c) which projects continuously from the cylindrical portion (14b) and which has, in an outer or peripheral portion thereof, the radial teeth (34) alternating with the recesses (36), **characterised in that** the bell further comprising at least one wall (38) which projects from the annular portion (14c) in a cantilevered manner and which is suitable for driving the braking band, the wall (38) extending at least one of the recesses (36) so that the at least one recess has a length (L) greater than a thickness (S) of the radial teeth (34) of the bell, the length (L) and the thickness (S) being measured in a direction substantially parallel to the rotation axis (15).

2. A disc-brake bell (14) according to Claim 1 in which the at least one wall (38) extends from the annular portion (14c) in a cantilevered manner, in a direction parallel to the rotation axis (15) of the bell.

3. A disc-brake bell (14) according to Claim 1 or Claim 2 in which the wall (38) projects from the free edge of the respective recess and the recesses (36) are free of axial catches which could restrain the braking band unilaterally with respect to movements substantially parallel to the axis (15).

4. A disc-brake bell (14) according to any one of the preceding claims, suitable for connection to a ventilated braking band (12).

5. A disc-brake bell (14) according to any one of the preceding claims in which each recess (36) is defined at least by a continuous, substantially "U"-shaped wall (38).

6. A disc-brake bell (14) according to Claim 5 in which the wall (38) extends around the sides and the head of the respective tooth of the braking band.

7. A disc-brake bell (14) according to any one of the preceding claims in which each wall (38) at least partially defining a recess (36) extends in a cantilevered manner relative to a plane (40) defining a front face of each tooth (34).

8. A disc-brake bell (14) according to Claim 7 in which the wall (38) extends in only one direction relative to the plane (40) containing a front face of each tooth (34).

9. A disc-brake bell (14) according to one or more of the preceding claims in which the wall (38) defines a seat (44) for housing axial restraining means (46) between the bell and a braking band (12).

10. A disc-brake bell (14) according to one or more of the preceding claims in which the wall (38) has a radial extent less than that of the adjacent teeth (34), thus leaving an outer portion of the teeth free.

11. A disc-brake bell (14) according to one or more of the preceding claims in which the ends of the defining wall (38) which project from the teeth of the bell are chamfered.

12. A disc-brake bell (14) according to Claim 11 in which the ends of the defining wall (38) which project from the teeth (34) of the bell are chamfered towards the inside of the respective recess (36).

13. A disc-brake bell (14) according to one or more of the preceding claims in which the defining wall (38) of each recess (36) is formed integrally with the bell.

14. A disc-brake bell (14) according to one or more of the preceding claims in which the external profile of each tooth (34) of the bell is a portion of a circle concentric with the bell.

15. A disc-brake bell (14) according to one or more of Claims 1 to 13 in which the external profile of each tooth (34) of the bell is a portion of an ellipse having its concave side facing the rotation axis (15) of the bell.

16. A disc-brake disc (10) comprising:
a braking band (12) provided with a plurality of radial teeth (26) formed along an inner portion of the braking band and alternating with respective recesses (28), and a disc-brake bell (14) according to claim 1,
the braking band (12) and the bell (14) having a rotation axis (15) and being connected to one another at least by a form fit between the teeth (26, 34) of one and the respective recesses (28, 36) of the other.

17. A disc-brake disc (10) according to Claim 16 in which the wall (38) of the bell (14) is shaped in a manner such as to define, with the tooth (26) of the braking band (12), a seat (44) for housing axial restraining means (46) acting between the bell (14) and the ventilated band (12).

18. A disc-brake disc (10) according to Claim 16 in which an insert element (42) capable of plastic or elastic deformation is fitted in the recess (36) between the wall (38) of the bell (14) and the respective tooth (26) of the braking band (12) to ensure a substantially uniform distribution of the loads transmitted by a braking action.

19. A disc-brake disc (10) according to Claims 17 and 18 in which the wall (38) of the bell (14) and the insert element (42) are shaped in a manner such as to define a seat (44) for housing axial restraining means (46) acting between the bell (14) and the ventilated band (12).

20. A disc-brake disc (10) according to Claim 19 in which the wall (38) of the bell (14) and the insert element (42) are substantially "U"-shaped, defining, with the tooth (26) of the braking band (12), a seat (44) for housing axial restraining means (46) operating between the bell (14) and the ventilated band (12).

21. A disc-brake disc (10) according to Claim 19 in which the wall (38) of the bell (14) is substantially "U"-shaped and in which the insert element (42) is substantially "W"-shaped defining, with the wall (38) of the respective recess (36) of the bell (14), a seat (44) for housing axial restraining means (46) operating between the bell (14) and the ventilated band (12).

22. A disc-brake disc (10) according to Claim 17 or Claim 19 in which the axial restraining means (46) comprise a plurality of pins (48) each of which is housed in one of the housing seats (44).

23. A disc-brake disc (10) according to any one of Claims 16 to 22 in which the wall (38) of a recess (36) of the bell (14) extends in a cantilevered manner relative to a plane (40) defining a front face of each tooth (34) of the bell, starting from a free edge of the recess.

24. A disc-brake disc (10) according to Claim 23 in which the wall (38) of a recess (36) of the bell (14) extends in a cantilevered manner along an axis parallel to the rotation axis (15).

25. A disc-brake disc (10) according to Claim 23 or Claim 24 in which the wall (38) of a recess (36) of the bell (14) extends in only one direction relative to the plane (40) defining a front face of each tooth (34) of the bell.

26. A disc-brake disc (10) according to any one of Claims 23 to 25 in which the plane (40) defining a front face of each tooth (34) of the bell is arranged as a theoretical extension of an inner surface (16a) of a plate (16) of a ventilated braking band (12).

27. A disc-brake disc (10) according to Claim 26 in which the thickness (S) of the teeth (34) of the bell (14) is substantially equal to the thickness (S') of the plate (16) disposed on the same side as the bell (14), the said thicknesses (S, S') being measured in a direction substantially parallel to the rotation axis (15).

28. A disc-brake disc (10) according to any one of Claims 16 to 27 in which the recesses (36) of the bell (14) have a length (L) greater than the thickness (s) of the teeth (26) of the braking band (12), the length (L) and the thickness (s) being measured in a direction substantially parallel to the rotation axis (15).

29. A disc-brake disc (10) according to any one of Claims 16 to 28 in which resilient means (56) are provided, interposed between the braking band (12) and the bell (14) and acting in a direction parallel to the rotation axis (15).

30. A disc-brake disc (10) according to Claim 29 in which the resilient means (56) comprise two Belleville washers or crinkle washers (58) fitted with their concave sides opposed on a pin (48) defining means (46) for restraining the braking band (12) axially relative to the bell (14).

31. A disc-brake disc (10) according to any one of Claims 16 to 30 in which the teeth (26) of the braking band (12) are constituted by extensions of fins (22b) defining ventilation ducts (24) inside the ventilated braking band.

32. A disc-brake disc (10) according to Claim 31 in which each fin (22b) which is extended to form a tooth (26) of the braking band (12) has a tangential enlargement (30) in the vicinity of the actual tooth.

33. A disc-brake disc (10) according to Claim 32 in which the wall (38) of a recess (36) of the bell (14) forms an extension of the tangential enlargement (30) in order to define a substantially continuous wall for the flow of the air.

34. A disc-brake disc (10) according to Claim 33 in which the ends of the wall (38) which project from the teeth (34) of the bell (14) are chamfered and have a shape complementary to the corresponding profiles of the tangential enlargement (30) of the fin (22b) of the braking band (12).

35. A disc-brake disc (10) according to one or more of Claims 16 to 34 in which the wall (38) of a recess (36) of the bell (14) has a radial extent less than that of the teeth (34) of the bell.

36. A disc-brake disc (10) according to any one of Claims 16 to 35 in which the external profiles of the teeth (34) of the bell (14) and the internal profiles of the recesses (28) of the braking band (12) are portions of circles concentric with the disc.

37. A disc-brake disc (10) according to any one of Claims 16 to 35 in which the external profiles of the teeth (34) of the bell (14) and the internal profiles of the recesses (28) of the braking band (12) are portions of ellipses having their concave sides facing towards the rotation axis (15).

38. A disc-brake disc (10) according to any one of Claims 16 to 37 in which the ventilated braking band (12) comprises two plates (16, 18) provided with holes (33) extending through the thickness of the plate.

## Patentansprüche

1. Scheibenbremsglocke (14), geeignet für die Verbindung mit einem Bremsband (12), wobei die Glocke eine Drehachse (15) aufweist und eine Vielzahl von radialen Zähnen (34) umfasst, die entlang einem Außen- oder Umfangsabschnitt der Glocke ausgebildet sind und sich mit entsprechenden Aussparungen (36) abwechseln, die zur Aufnahme radialer Zähne des Bremsbands geeignet sind, wobei die Glocke eine Platte (14a) umfasst, die mit Löchern für die Verbindung mit einer Radnabe eines Fahrzeugs versehen sind, einen zylindrischen Abschnitt (14b), der durchgehend von einer äußeren Kante der Platte (14a) parallel zu der Drehachse (15) herausragt, einen ringförmigen Abschnitt (14c), der durchgehend aus dem zylindrischen Abschnitt (14b) hervorragt und der in einem Außen- oder Umfangsabschnitt davon die radialen Zähne (34) aufweist, die sich mit den Aussparungen (36) abwechseln, **dadurch gekennzeichnet, dass** die Glocke des Weiteren wenigstens eine Wand (38) umfasst, die aus dem ringförmigen Abschnitt (14c) ausladend hervorragt, und die geeignet ist, das Bremsband anzutreiben, wobei die Wand (38) wenigstens eine der Aussparungen (36) so verlängert, dass die wenigstens eine Aussparung eine Länge (L) aufweist, die größer als eine Dicke (S) der radialen Zähne (34) der Glocke ist, wobei die Länge (L) und die Dicke (S) in einer Richtung gemessen werden, die im Wesentlichen parallel zu der Drehachse (15) verläuft.

2. Scheibenbremsglocke (14) gemäß Anspruch 1, wobei die wenigstens eine Wand (38) aus dem ringförmigen. Abschnitt (14c) ausladend in einer Richtung hervorragt, die parallel zu der Drehachse (15) der Glocke verläuft.

3. Scheibenbremsglocke (14) gemäß Anspruch 1 oder Anspruch 2, wobei die Wand (38) aus der freien Kante der entsprechenden Aussparung hervorragt, und die Aussparungen (36) frei von axialen Arretierungen sind, die das Bremsband einseitig in Bezug auf die im Wesentlichen zu der Achse (15) parallelen Bewegungen feststellen könnten.

4. Scheibenbremsglocke (14) gemäß einem der vorhergehenden Ansprüche, geeignet für die Verbindung mit einem belüfteten Bremsband (12).

5. Scheibenbremsglocke (14) gemäß einem der vorhergehenden Ansprüche, wobei jede Aussparung (36) wenigstens durch eine durchgehende, im Wesentlichen "U"-förmige Wand (38) definiert ist.

6. Scheibenbremsglocke (14) gemäß Anspruch 5, wobei sich die Wand (38) um die Seiten und den Kopf des entsprechenden Zahns des Bremsbands erstreckt.

7. Scheibenbremsglocke (14) gemäß einem der vorhergehenden Ansprüche, wobei jede Wand (38), die wenigstens teilweise eine Aussparung (36) definiert, sich in Bezug auf eine Ebene (40) ausladend erstreckt, die eine Vorderseite jedes Zahns (34) definiert.

8. Scheibenbremsglocke (14) gemäß Anspruch 7, wobei sich die Wand (38) in nur eine Richtung in Bezug auf die Ebene (40) erstreckt, die eine Vorderseite jedes Zahns (34) enthält.

9. Scheibenbremsglocke (14) gemäß einem oder mehreren der vorhergehenden Ansprüche, wobei die Wand (38) einen Sitz (44) zum Aufnehmen von axialen Haltemitteln (46) zwischen der Glocke und einem Bremsband (12) definiert.

10. Scheibenbremsglocke (14) gemäß einem oder mehreren der vorhergehenden Ansprüche, wobei die Wand (38) eine radiale Ausdehnung aufweist, die geringer ist als diejenige der benachbarten Zähne (34), wodurch ein äußerer Abschnitt der Zähne frei bleibt.

11. Scheibenbremsglocke (14) gemäß einem oder mehreren der vorhergehenden Ansprüche, wobei die Enden der definierenden Wand (38), die von den Zähnen der Glocke herausragen, abgefast sind.

12. Scheibenbremsglocke (14) gemäß Anspruch 11, wobei die Enden der definierenden Wand (38), die von den Zähnen (34) der Glocke herausragen, zur Innenseite der entsprechenden Aussparungen (36) hin abgefast sind.

13. Scheibenbremsglocke (14) gemäß einem oder mehreren der vorhergehenden Ansprüche, wobei die definierende Wand (38) jeder Aussparung (36) integral mit der Glocke ausgeformt ist.

14. Scheibenbremsglocke (14) gemäß einem oder mehreren der vorhergehenden Ansprüche, wobei das äußere Profil jedes Zahns (34) der Glocke ein Abschnitt eines mit der Glocke konzentrischen Kreises ist.

15. Scheibenbremsglocke (14) gemäß einem oder mehreren der Ansprüche 1 bis 13, wobei das äußere Profil jedes Zahns (34) der Glocke ein Abschnitt einer Ellipse ist, deren konkave Seite der Drehachse (15) der Glocke zugewandt ist.

16. Scheibenbremsscheibe (10) umfassend:
ein Bremsband (12), das mit einer Vielzahl von radialen Zähnen (26) versehen ist, die entlang einem inneren Abschnitt des Bremsbands ausgebildet sind und sich mit entsprechenden Aussparungen (28) abwechseln, und eine Scheibenbremsglocke (14) gemäß Anspruch 1,
wobei das Bremsband (12) und die Glocke (14) eine Drehachse (15) aufweisen und miteinander wenigstens durch einen Formschluss zwischen den Zähnen (26, 34) des einen und den entsprechenden Aussparungen (28, 36) der anderen verbunden sind.

17. Scheibenbremsscheibe (10) gemäß Anspruch 16, wobei die Wand (38) der Glocke (14) so ausgeformt ist, dass sie mit dem Zahn (26) des Bremsbands (12) einen Sitz (44) zum Aufnehmen von axialen Haltemitteln (46) definiert, die zwischen der Glocke (14) und dem belüfteten Band (12) wirken.

18. Scheibenbremsscheibe (10) gemäß Anspruch 16, wobei ein Einsatzelement (42), das plastisch oder elastisch verformbar ist, in die Aussparung (36) zwischen der Wand (38) der Glocke (14) und dem entsprechenden Zahn (26) des Bremsbands (12) eingepasst ist, um eine im Wesentlichen gleichförmige Verteilung der Belastungen sicherzustellen, die von einem Bremsvorgang übertragen werden.

19. Scheibenbremsscheibe (10) gemäß den Ansprüchen 17 und 18, wobei die Wand (38) der Glocke (14) und das Einsatzelement (42) so geformt sind, dass sie einen Sitz (44) zum Aufnehmen von axialen Haltemitteln (46) definieren, die zwischen der Glocke (14) und dem belüfteten Band (12) wirken.

20. Scheibenbremsscheibe (10) gemäß Anspruch 19, wobei die Wand (38) der Glocke (14) und das Einsatzelement (42) im Wesentlichen "Ú"-förmig sind, wobei sie mit dem Zahn (26) des Bremsbands (12) einen Sitz (44) zum Aufnehmen von axialen Haltemitteln (46) definieren, die zwischen der Glocke (14) und dem belüfteten Band (12) wirken.

21. Scheibenbremsscheibe (10) gemäß Anspruch 19, wobei die Wand (38) der Glocke (14) im Wesentlichen "U"-förmig ist, und wobei das Einsatzelement (42) im Wesentlichen "W"-förmig ist und mit der Wand (38) der entsprechenden Aussparung (36) der Glocke (14) einen Sitz (44) zum Aufnehmen von axialen Haltemitteln (46) definiert, die zwischen der Glocke (14) und dem belüfteten Band (12) wirken.

22. Scheibenbremsscheibe (10) gemäß Anspruch 17 oder Anspruch 19, wobei die axialen Haltemittel (46) eine Vielzahl von Stiften (48) umfassen, von denen jeder in einer der aufnehmenden Sitzn (44) aufgenommen ist.

23. Scheibenbremsscheibe (10) gemäß irgendeinem der Ansprüche 16 bis 22, wobei sich die Wand (38) einer Aussparung (36) der Glocke (14) ausladend in Bezug auf eine Ebene (40) erstreckt, die eine Vorderseite jedes Zahns (34) der Glocke definiert, beginnend von einer freien Kante der Aussparung aus.

24. Scheibenbremsscheibe (10) gemäß Anspruch 23, wobei sich die Wand (38) einer Aussparung (36) der Glocke (14) ausladend entlang einer Achse erstreckt, die parallel zu der Drehachse (15) verläuft.

25. Scheibenbremsscheibe (10) gemäß Anspruch 23 oder Anspruch 24, wobei die Wand (38) einer Aussparung (36) der Glocke (14) sich nur in eine Richtung in Bezug auf die Ebene (40) erstreckt, die eine Vorderseite jedes Zahns (34) der Glocke definiert.

26. Scheibenbremsscheibe (10) gemäß irgendeinem der Ansprüche 23 bis 25, wobei die Ebene (40), die eine Vorderseite jedes Zahns (34) der Glocke definiert, als eine theoretische Verlängerung einer inneren Oberfläche (16a) einer Platte (16) eines belüfteten Bremsbands (12) angeordnet ist.

27. Scheibenbremsscheibe (10) gemäß Anspruch 26, wobei die Dicke (S) der Zähne (34) der Glocke (14) im Wesentlichen gleich der Dicke (S') der Platte (16) ist, die auf der gleichen Seite wie die Glocke (14) angeordnet ist, wobei die Dicken (S, S') in einer Richtung gemessen werden, die im Wesentlichen parallel zu der Drehachse (15) verlaufen.

28. Scheibenbremsscheibe (10) gemäß irgendeinem der Ansprüche 16 bis 27, wobei die Aussparungen (36) der Glocke (14) eine Länge (L) aufweisen, die größer als die Dicke (s) der Zähne (26) des Bremsbands (12) ist, wobei die Länge (L) und die Dicke (s) in einer Richtung gemessen werden, die im Wesentlichen parallel zu der Drehachse (15) verläuft.

29. Scheibenbremsscheibe (10) gemäß irgendeinem der Ansprüche 16 bis 28, wobei elastische Mittel (56) zwischen dem Bremsband (12) und der Glocke (14) angeordnet vorgesehen sind und in einer Richtung wirken, die parallel zu der Drehachse (15) verläuft.

30. Scheibenbremsscheibe (10) gemäß Anspruch 29, wobei die elastischen Mittel (56) zwei Belleville-Scheiben oder Wellscheiben (58) umfassen, die mit ihren einander entgegengesetzten konkaven Seiten auf einem Stift (48) befestigt sind und Mittel (46) zum Halten des Bremsbands (12) in axialem Bezug zur Glocke (14) definieren.

31. Scheibenbremsscheibe (10) gemäß irgendeinem der Ansprüche 16 bis 30, wobei die Zähne (26) des Bremsbands (12) durch Verlängerungen von Rippen (22b) ausgebildet sind, die Lüftungskanäle (24) in dem belüfteten Bremsband definieren.

32. Scheibenbremsscheibe (10) gemäß Anspruch 31, wobei jede Rippe (22b), die verlängert ist, um einen Zahn (26) des Bremsbands (12) auszubilden, eine tangentiale Vergrößerung (30) in der Nähe des eigentlichen Zahns aufweist.

33. Scheibenbremsscheibe (10) gemäß Anspruch 32, wobei die Wand (38) einer Aussparung (36) der Glocke (14) eine Verlängerung der tangentialen Vergrößerung ausbildet, um eine im Wesentlichen durchgehende Wand für das Fließen der Luft zu definieren.

34. Scheibenbremsscheibe (10) gemäß Anspruch 33, wobei die Enden der Wand (38), die von den Zähnen (34) der Glocke (14) herausragen, abgefast sind und eine komplementäre Form zu den entsprechenden Profilen der tangentialen Vergrößerung (30) der Rippe (22b) des Bremsbands (12) aufweisen.

35. Scheibenbremsscheibe (10) gemäß einem oder mehreren der Ansprüche 16 bis 34, wobei die Wand (38) einer Aussparung (36) der Glocke (14) eine radiale Ausdehnung aufweist, die geringer ist als diejenige der Zähne (34) der Glocke.

36. Scheibenbremsscheibe (10) gemäß irgendeinem der Ansprüche 16 bis 35, wobei die äußeren Profile der Zähne (34) der Glocke (14) und die inneren Profile der Aussparungen (28) des Bremsbands (12) Abschnitte von Kreisen sind, die mit der Scheibe konzentrisch sind.

37. Scheibenbremsscheibe (10) gemäß irgendeinem der Ansprüche 16 bis 35, wobei die äußeren Profile der Zähne (34) der Glocke (14) und die inneren Profile der Aussparungen (28) des Bremsbands (12) Abschnitte von Ellipsen sind, deren konkave Seiten zur Drehachse (15) zugewandt sind.

38. Scheibenbremsscheibe (10) gemäß irgendeinem der Ansprüche 16 bis 37, wobei das belüftete Bremsband (12) zwei Platten (16, 18) umfasst, die mit Löchern (33) versehen sind, die sich durch die Dicke der Platte erstrecken.

## Revendications

1. Cloche de frein à disques (14), appropriée pour une connexion à une bande de freinage (12), la cloche ayant un axe de rotation (15) et comprenant une pluralité de dents radiales (34) formées le long d'une partie extérieure ou périphérique de la cloche et alternant avec des retraits (36) respectifs appropriés pour accueillir les dents radiales de la bande de freinage, dans laquelle la cloche comprend une plaque (14a) pourvue de trous à des fins de connexion avec un moyeu de roue d'un véhicule, une partie cylindrique (14b) qui fait saillie de manière continue depuis un bord extérieur de la plaque (14a) parallèle à l'axe de rotation (15), une partie annulaire (14c) qui fait saillie de manière continue à partir de la partie cylindrique (14b) et qui a, dans une partie extérieure ou périphérique de celle-ci, les dents radiales (34) alternant avec les retraits (36), **caractérisée en ce que** la cloche comprend en outre au moins une paroi (38) qui fait saillie à partir de la partie annulaire (14c) à la manière d'une console et qui est appropriée pour entraîner la bande de freinage, la paroi (38) étendant au moins l'un des retraits (36) afin que le au moins un retrait ait une longueur (L) supérieure à une épaisseur (S) des dents radiales (34) de la cloche, la longueur (L) et l'épaisseur (S) étant mesurées dans une direction sensiblement parallèle à l'axe de rotation (15).

2. Cloche de frein à disques (14) selon la revendication 1, dans laquelle la au moins une paroi (38) s'étend à partir de la partie annulaire (14c) à la manière d'une console, dans une direction parallèle à l'axe de rotation (15) de la cloche.

3. Cloche de frein à disques (14) selon la revendication 1 ou la revendication 2, dans laquelle la paroi (38) fait saillie à partir du bord libre du retrait respectif et les retraits (36) sont exempts de prises axiales qui pourraient retenir la bande de freinage unilatéralement eu égard aux mouvements sensiblement parallèles à l'axe (15).

4. Cloche de frein à disques (14) selon l'une quelconque des revendications précédentes, appropriée pour une connexion à une bande de freinage (12) ventilée.

5. Cloche de frein à disques (14) selon l'une quelconque des revendications précédentes, dans laquelle chaque retrait (36) est défini au moins par une paroi sensiblement en forme de « U » continue (38).

6. Cloche de frein à disques (14) selon la revendication 5, dans laquelle la paroi (38) s'étend autour des côtés et de la tête de la dent respective de la bande de freinage.

7. Cloche de frein à disques (14) selon l'une quelconque des revendications précédentes, dans laquelle chaque paroi (38) définissant au moins partiellement un retrait (36) s'étend à la manière d'une console par rapport à un plan (40) définissant une face avant de chaque dent (34).

8. Cloche de frein à disques (14) selon la revendication 7, dans laquelle la paroi (38) s'étend dans une seule direction par rapport au plan (40) contenant une face avant de chaque dent (34).

9. Cloche de frein à disques (14) selon une ou plusieurs des revendications précédentes, dans laquelle la paroi (38) définit un siège (44) pour accueillir des moyens de retenue axiale (46) entre la cloche et une bande de freinage (12).

10. Cloche de frein à disques (14) selon une ou plusieurs des revendications précédentes, dans laquelle la paroi (38) a une portée radiale inférieure à celle des dents adjacentes (34), laissant ainsi une partie extérieure des dents libre.

11. Cloche de frein à disques (14) selon une ou plusieurs des revendications précédentes, dans laquelle les extrémités de la paroi définissante (38) qui font saillie à partir des dents de la cloche sont chanfreinées.

12. Cloche de frein à disques (14) selon la revendication 11, dans laquelle les extrémités de la paroi définissante (38) qui font saillie à partir des dents (34) de la cloche sont chanfreinées vers l'intérieur du retrait (36) respectif.

13. Cloche de frein à disques (14) selon une ou plusieurs des revendications précédentes, dans laquelle la paroi définissante (38) de chaque retrait (36) est formée intégralement avec la cloche.

14. Cloche de frein à disques (14) selon une ou plusieurs des revendications précédentes, dans laquelle le profil externe de chaque dent (34) de la cloche est une partie d'un cercle concentrique par rapport à la cloche.

15. Cloche de frein à disques (14) selon une ou plusieurs des revendications 1 à 13, dans laquelle le profil externe de chaque dent (34) de la cloche est une partie d'une ellipse ayant son côté concave faisant face à l'axe de rotation (15) de la cloche.

16. Disque de frein à disques (10) comprenant :
une bande de freinage (12) pourvue d'une pluralité de dents radiales (26) formées le long d'une partie intérieure de la bande de freinage et alternant avec des retraits (28) respectifs, et une cloche de frein à disques (14) selon la revendication 1,
la bande de freinage (12) et la cloche (14) ayant un axe de rotation (15) et étant connectées l'une à l'autre au moins par une insertion de forme entre les dents (26, 34) de l'une et les retraits (28, 36) respectifs de l'autre.

17. Disque de frein à disques (10) selon la revendication 16, dans lequel la paroi (38) de la cloche (14) est formée de sorte à définir, avec la dent (26) de la bande de freinage (12), un siège (44) pour accueillir les moyens de retenue axiale (46) agissant entre la cloche (14) et la bande (12) ventilée.

18. Disque de frein à disques (10) selon la revendication 16, dans lequel un élément insert (42) capable de déformation plastique ou élastique est placé dans le retrait (36) entre la paroi (38) de la cloche (14) et la dent (26) respective de la bande de freinage (12) pour garantir une distribution sensiblement uniforme des charges transmises par une action de freinage.

19. Disque de frein à disques (10) selon les revendications 17 et 18, dans lequel la paroi (38) de la cloche (14) et l'élément insert (42) sont formés de sorte à définir un siège (44) pour accueillir les moyens de retenue axiale (46) agissant entre la cloche (14) et la bande (12) ventilée.

20. Disque de frein à disques (10) selon la revendication 19, dans lequel la paroi (38) de la cloche (14) et l'élément insert (42) ont sensiblement une forme de « U », définissant, avec la dent (26) de la bande de freinage (12), un siège (44) pour accueillir les moyens de retenue axiale (46) fonctionnant entre la cloche (14) et la bande (12) ventilée.

21. Disque de frein à disques (10) selon la revendication 19, dans lequel la paroi (38) de la cloche (14) est sensiblement en forme de « U » et dans lequel l'élément insert (42) est sensiblement en forme de « W », avec la paroi (38) du retrait (36) respectif de la cloche (14), un siège (44) pour accueillir les moyens de retenue axiale (46) fonctionnant entre la cloche (14) et la bande (12) ventilée.

22. Disque de frein à disques (10) selon la revendication 17 ou la revendication 19, dans lequel les moyens de retenue axiale (46) comprennent une pluralité de broches (48) dont chacune est accueillie dans l'un des sièges du boîtier (44).

23. Disque de frein à disques (10) selon l'une quelconque des revendications 16 à 22, dans lequel la paroi (38) d'un retrait (36) de la cloche (14) s'étend à la manière d'une console par rapport à un plan (40) définissant une face avant de chaque dent (34) de la cloche, en commençant par un bord libre du retrait.

24. Disque de frein à disques (10) selon la revendication 23, dans lequel la paroi (38) d'un retrait (36) de la cloche (14) s'étend à la manière d'une console le long d'un axe parallèle à l'axe de rotation (15).

25. Disque de frein à disques (10) selon la revendication 23 ou la revendication 24, dans lequel la paroi (38) d'un retrait (36) de la cloche (14) s'étend dans une seule direction par rapport au plan (40) définissant une face avant de chaque dent (34) de la cloche.

26. Disque de frein à disques (10) selon l'une quelconque des revendications 23 à 25, dans lequel le plan (40) définissant une face avant de chaque dent (34) de la cloche est agencé comme une extension théorique d'une surface intérieure (16a) d'une plaque (16) d'une bande de freinage (12) ventilée.

27. Disque de frein à disques (10) selon la revendication 26, dans lequel l'épaisseur (S) des dents (34) de la cloche (14) est sensiblement égale à l'épaisseur (S') de la plaque (16) disposée sur le même côté que la cloche (14), ladite épaisseur (S, S') étant mesurée dans une direction sensiblement parallèle à l'axe de rotation (15).

28. Disque de frein à disques (10) selon l'une quelconque des revendications 16 à 27, dans lequel les retraits (36) de la cloche (14) ont une longueur (L) supérieure à l'épaisseur (s) des dents (26) de la bande de freinage (12), la longueur (L) et l'épaisseur (s) étant mesurées dans une direction sensiblement parallèle à l'axe de rotation (15).

29. Disque de frein à disques (10) selon l'une quelconque des revendications 16 to 28, dans lequel des moyens résilients (56) sont prévus, interposées entre la bande de freinage (12) et la cloche (14) et agissant dans une direction parallèle à l'axe de rotation (15).

30. Disque de frein à disques (10) selon la revendication 29, dans lequel les moyens résilients (56) comprennent deux rondelles Belleville ou rondelles à ressort (58) placées avec leurs côtés concaves opposés sur une broche (48) définissant des moyens (46) pour retenir la bande de freinage (12) de manière axiale par rapport à la cloche (14).

31. Disque de frein à disques (10) selon l'une quelconque des revendications 16 à 30, dans lequel les dents (26) de la bande de freinage (12) sont constituées par des extensions d'ailettes (22b) définissant des conduits de ventilation (24) à l'intérieur de la bande de freinage ventilée.

32. Disque de frein à disques (10) selon la revendication 31, dans lequel chaque ailette (22b) qui est étendue pour former une dent (26) de la bande de freinage (12) a un élargissement tangentiel (30) à proximité de la dent réelle.

33. Disque de frein à disques (10) selon la revendication 32, dans lequel la paroi (38) d'un retrait (36) de la cloche (14) forme une extension de l'élargissement tangentiel (30) afin de définir une paroi sensiblement continue pour l'écoulement de l'air.

34. Disque de frein à disques (10) selon la revendication 33, dans lequel les extrémités de la paroi (38) qui font saillie à partir des dents (34) de la cloche (14) sont chanfreinées et ont une forme complémentaire aux profils correspondants de l'élargissement tangentiel (30) de l'ailette (22b) de la bande de freinage (12).

35. Disque de frein à disques (10) selon une ou plusieurs des revendications 16 à 34, dans lequel la paroi (38) d'un retrait (36) de la cloche (14) a une portée radiale inférieure à celle des dents (34) de la cloche.

36. Disque de frein à disques (10) selon l'une quelconque des revendications 16 à 35, dans lequel les profils externes des dents (34) de la cloche (14) et les profils internes des retraits (28) de la bande de freinage (12) sont des parties de cercles concentriques avec le disque.

37. Disque de frein à disques (10) selon l'une quelconque des revendications 16 à 35, dans lequel les profils externes des dents (34) de la cloche (14) et les profils internes des retraits (28) de la bande de freinage (12) sont des parties d'ellipses ayant leurs côtés concaves faisant face à l'axe de rotation (15).

38. Disque de frein à disques (10) selon l'une quelconque des revendications 16 à 37, dans lequel la bande de freinage (12) ventilée comprend deux plaques (16, 18) pourvues de trous (33) s'étendant à travers l'épaisseur de la plaque.
